# EUROPEAN PATENT APPLICATION

(11) **EP 4 826 485 A1**
(43) Date of publication of application: **21.10.2026**
(21) Application number: 26172886.9
(22) Date of filing: 16.04.2026
(51) Int. Cl.: G05D 23/19, B60H 1/00, F24F 11/80

(54) **METHOD FOR CONTROLLING TEMPERATURE IN SPECIFIC SPACE AND TEMPERATURE CONTROL DEVICE**

(30) Priority: 17.04.2025 CN 202510487535
(71) Applicant: Valeo Electrification, 95892 Cergy Pontoise (FR)
(72) Inventor: MA, Simo-Longsheng, Shashi, 434007 (CN); ZHANG, Yin, Shashi, 434007 (CN); LU, Dengke, Shashi, 434007 (CN); XIANG, Li, Shashi, 434007 (CN); ZENG, Like, Shashi, 434007 (CN)
(74) Representative: Valeo Powertrain Systems

(57) **Abstract**

Embodiments of the present disclosure provide a method for controlling temperature in a specific space, a method for acquiring temperature in a specific space, a method for training a neural network model, a temperature control device, a computer program product and a computer-readable storage medium. The method for controlling temperature in a specific space comprises: acquiring a first environment parameter in the specific space and a second environment parameter outside the specific space; using a neural network model to predict at least one representative temperature in the specific space on the basis of the first environment parameter and the second environment parameter; and adjusting an operating mode of an environment parameter control device in the specific space on the basis of the at least one representative temperature in the specific space. The method of the present disclosure can measure temperature in a specific space with greater sensitivity and accuracy at a lower cost, and control temperature in the specific space more accurately on this basis.

## Description

### Technical Field

The present disclosure relates to the fields of motor vehicles, temperature detection, artificial intelligence and other fields, in particular to a method for controlling temperature in a specific space, a method for acquiring temperature in a specific space, a method for training a neural network model, a temperature control device, a computer program product and a computer-readable storage medium.

### Background Art

**In** the case of certain spaces with high requirements for temperature environment (e.g. vehicles, rooms, laboratories, etc.), real-time monitoring of temperature within the space is essential. For example, in vehicle application scenarios, real-time monitoring of in-vehicle temperature, to acquire accurate in-vehicle temperature and thereby control in-vehicle temperature to remain within a range that is comfortable for humans, can improve comfort for people within the vehicle, avoiding a poor driving state of the driver due to unsuitable in-vehicle temperature, and reducing the incidence of vehicle accidents. As another example, in hospital ward application scenarios, patients are very sensitive to temperature changes due to physical discomfort, and failure to strictly control ward temperature within a comfortable range is very likely to cause deterioration in the patient's condition. As another example, in laboratory application scenarios, a slight change in temperature might affect the precision of experimental equipment, in turn affecting the accuracy of experimental results, so very sensitive and accurate detection of laboratory temperature is required.

At present, measurement of temperature within a specific space is typically accomplished using a temperature sensor. To obtain accurate temperatures at multiple key positions (e.g. positions of key people or key devices) in a specific space, multiple high-precision temperature sensors need to be installed in the specific space (wherein one or more high-precision temperature sensor is installed at each key position). Such an approach is extremely costly. Moreover, it is often the case that a temperature sensor can only measure a change in temperature at a key position after a period of time has elapsed after a change has occurred in an environment parameter within the specific space (e.g. illumination, airflow speed, airflow control mode, temperature at points in the specific space other than the key positions, etc.), so there is a serious delay. Furthermore, this will make it difficult to control temperature control equipment within the specific space on the basis of measured temperature at the key positions, so as to adjust the temperature at the key positions to the required range.

Thus, it is essential to further reduce the cost of temperature measurement, increase the precision of temperature measurement and reduce measurement delay in specific spaces.

### Summary of the Invention

To measure temperature in a specific space with greater sensitivity and accuracy at a lower cost, and control temperature in the specific space more accurately on this basis, the present disclosure proposes a method for controlling temperature in a specific space, comprising: acquiring a first environment parameter in the specific space and a second environment parameter outside the specific space, wherein the first environment parameter comprises: at least one of illumination intensity, airflow speed, airflow control mode, and temperature of at least one first predetermined point in the specific space, and the second environment parameter comprises: at least one of illumination intensity, airflow speed, and temperature of at least one second predetermined point outside the specific space; using a neural network model to predict at least one representative temperature in the specific space on the basis of the first environment parameter and the second environment parameter; and adjusting an operating mode of an environment parameter control device in the specific space on the basis of the at least one representative temperature in the specific space.

According to embodiments of the present disclosure, the at least one representative temperature in the specific space comprises a temperature of at least one key position in the specific space, wherein the at least one key position in the specific space comprises at least one of a position of a user in the specific space and a position of a key device in the specific space.

According to embodiments of the present disclosure, the environment parameter control device comprises multiple control sub-devices, wherein each said key position is associated with at least one said control sub-device.

According to embodiments of the present disclosure, the specific space is any one of a vehicle, a train carriage, an aeroplane, a laboratory cabin module and a room, and the environment parameter control device comprises at least one heating device and/or at least one cooling device.

Embodiments of the present disclosure further provide a method for acquiring temperature in a specific space, comprising: acquiring a first environment parameter in the specific space and a second environment parameter outside the specific space, wherein the first environment parameter comprises: at least one of illumination intensity, airflow speed, airflow control mode, and temperature of at least one first predetermined point in the specific space, and the second environment parameter comprises: at least one of illumination intensity, airflow speed, and temperature of at least one second predetermined point outside the specific space; and using a neural network model to predict at least one representative temperature in the specific space on the basis of the first environment parameter and the second environment parameter.

Embodiments of the present disclosure further provide a method for training a neural network model, comprising: acquiring a first environment parameter in the specific space and a second environment parameter outside the specific space, wherein the first environment parameter comprises: at least one of illumination intensity, airflow speed, airflow control mode, and temperature of at least one first predetermined point in the specific space, and the second environment parameter comprises: at least one of illumination intensity, airflow speed, and temperature of at least one second predetermined point outside the specific space; using a first neural network model to predict at least one representative temperature in the specific space on the basis of the first environment parameter and the second environment parameter, to obtain at least one predicted representative temperature in the specific space; and training the first neural network model on the basis of a difference between the at least one predicted representative temperature and at least one actually measured representative temperature in the specific space.

According to embodiments of the present disclosure, the first neural network model comprises an input layer, a hidden layer and an output layer, wherein the first environment parameter and the second environment parameter are processed sequentially via the input layer, the hidden layer and the output layer to obtain the at least one predicted representative temperature in the specific space, wherein an activation function of the hidden layer is determined on the basis of a logic function.

According to embodiments of the present disclosure, the method for training a neural network model further comprises: using a second neural network model to predict an operating mode of an environment parameter control device in the specific space on the basis of the at least one predicted representative temperature, to obtain a predicted operating mode; and training the second neural network model on the basis of a difference between the predicted operating mode and an empirical operating mode corresponding to the at least one predicted representative temperature.

Embodiments of the present disclosure further provide an apparatus for controlling temperature in a specific space, comprising: a parameter acquisition module, configured to: acquire a first environment parameter in the specific space and a second environment parameter outside the specific space, wherein the first environment parameter comprises: at least one of illumination intensity, airflow speed, airflow control mode, and temperature of at least one first predetermined point in the specific space, and the second environment parameter comprises: at least one of illumination intensity, airflow speed, and temperature of at least one second predetermined point outside the specific space; a prediction module, configured to: use a neural network model to predict at least one representative temperature in the specific space on the basis of the first environment parameter and the second environment parameter; and a control module, configured to: adjust an operating mode of an environment parameter control device in the specific space on the basis of the at least one representative temperature in the specific space.

Embodiments of the present disclosure further provide an apparatus for training a neural network model, comprising: a parameter acquisition module, configured to: acquire a first environment parameter in the specific space and a second environment parameter outside the specific space, wherein the first environment parameter comprises: at least one of illumination intensity, airflow speed, airflow control mode, and temperature of at least one first predetermined point in the specific space, and the second environment parameter comprises: at least one of illumination intensity, airflow speed, and temperature of at least one second predetermined point outside the specific space; a prediction module, configured to: use a first neural network model to predict at least one representative temperature in the specific space on the basis of the first environment parameter and the second environment parameter, to obtain at least one predicted representative temperature in the specific space; and a training module, configured to: train the first neural network model on the basis of a difference between the at least one predicted representative temperature and at least one actually measured representative temperature in the specific space.

Embodiments of the present disclosure further provide a temperature control device, comprising: a memory and a processor, wherein the memory stores an instruction executable by the processor, and the instruction, when executed by the processor, causes the processor to perform the method described above for controlling temperature in a specific space.

Embodiments of the present disclosure further provide a vehicle controller, comprising: a memory and a processor, wherein the memory stores an instruction executable by the processor, and the instruction, when executed by the processor, causes the processor to perform the method for controlling temperature in a specific space or the method for acquiring temperature in a specific space as described above.

Embodiments of the present disclosure further provide a vehicle, comprising the vehicle controller described above.

Embodiments of the present disclosure further provide a computer-readable storage medium, having stored thereon a computer-executable instruction which, when executed by a processor, is used to implement the method described above.

Embodiments of the present disclosure further provide a computer program product, comprising computer software code which, when executed by a processor, is used to implement the method described above.

The method of the present disclosure for controlling temperature in a specific space can simultaneously take into account the influence of the first environment parameters in the specific space (e.g. at least one of illumination intensity, airflow speed, airflow control mode, and temperature of at least one first predetermined point in the specific space) and the second environment parameters outside the specific space (e.g. at least one of illumination intensity, airflow speed, and temperature of at least one second predetermined point outside the specific space) on temperature in the specific space, to measure at least one representative temperature in the specific space with greater sensitivity and accuracy at a lower cost, and control temperature in the specific space more accurately and effectively on this basis.

Further, since the efficacy of control of temperature in the specific space is increased, the energy consumption of the environment parameter control device that controls temperature in the specific space is also reduced.

**In** application scenarios in which the specific space is a vehicle, train carriage, aeroplane or room, etc., the method of the present disclosure for controlling temperature in a specific space is able to quickly and accurately control temperature within a range of human comfort, so as to make a person in the specific space more comfortable.

### Brief Description of the Drawings

**In** order to explain the technical solutions of embodiments of the present disclosure more clearly, drawings required for describing the embodiments are briefly described below. Obviously, the drawings in the description below are merely some exemplary embodiments of the present disclosure, and those skilled in the art could obtain other drawings based on these drawings without expending inventive effort.

In the drawings:
Figs. 1A and 1B are schematic drawings of a vehicle application scenario according to embodiments of the present disclosure.
Fig. 2 is a schematic flow chart of a method for controlling temperature in a specific space according to embodiments of the present disclosure.
Fig. 3 is a schematic flow chart of a method for training a neural network model according to embodiments of the present disclosure.
Fig. 4 is a schematic drawing of a process of processing data on the basis of a neural network model according to embodiments of the present disclosure.
Fig. 5 is a schematic flow chart of a process of training a neural network model according to the present disclosure.
Fig. 6 is a schematic drawing of the composition of an apparatus for controlling temperature in a specific space according to embodiments of the present disclosure; and
Fig. 7 is a schematic drawing of the composition of an apparatus for training a neural network model according to embodiments of the present disclosure.

### Detailed Description of the Invention

To make the objectives, technical solutions and advantages of the present disclosure more obvious, exemplary embodiments according to the present disclosure are described in detail below with reference to the accompanying drawings. Obviously, the described embodiments are merely some, rather than all, of the embodiments of the present disclosure; it should be understood that the present disclosure is not limited by the exemplary embodiments described herein.

In addition, herein and in the accompanying drawings, substantially identical or similar steps and elements are indicated using identical or similar reference numerals, and repeated descriptions of these steps and elements are omitted.

Further, herein and in the accompanying drawings, elements are described in singular or plural form according to the embodiments. However, the singular and plural forms are appropriately selected for use in the proposed case merely to facilitate explanation, and are not intended to limit the present disclosure. Therefore, the singular form may include the plural form, and the plural form may also include the singular form, unless otherwise specified in the context explicitly.

In addition, herein and in the accompanying drawings, the terms "first/second" merely distinguish between similar objects and do not represent a specific ranking of objects. It will be understood that if permitted, the specific sequence or order of "first/second" can be swapped to enable embodiments of the present disclosure described herein to be implemented in a different order from that illustrated or described herein.

It should be explained that the method of the present disclosure for controlling temperature in a specific space may be used in various application scenarios such as vehicles, train carriages, aeroplanes, laboratory cabin modules and rooms. The specific space in the present disclosure may be an airtight space (such as a vehicle with doors and windows closed, a hermetic chamber, etc.), or may be a non-airtight space connected to another space outside the specific space (such as a vehicle with open windows, a room with windows open, etc.); no limitations are imposed herein.

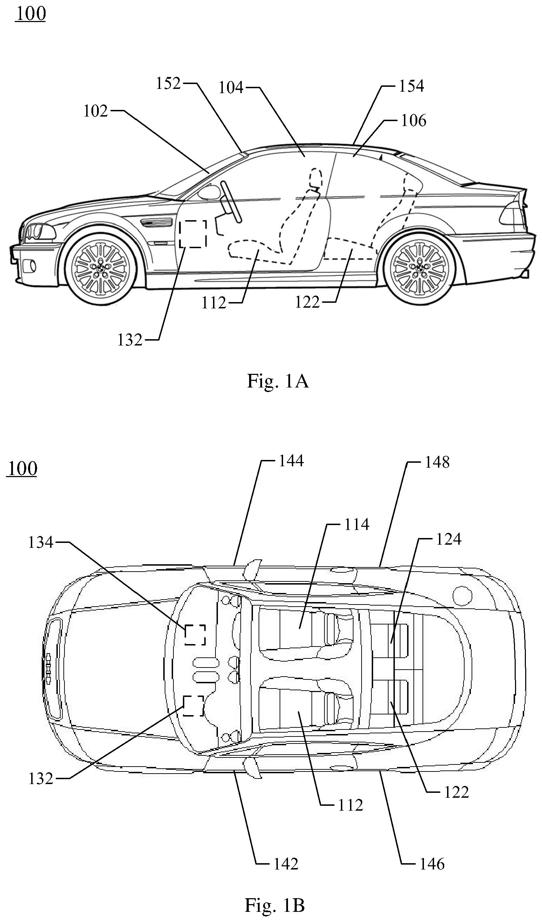

To facilitate understanding of the concept of the present disclosure, an application scenario in which the specific space is a vehicle is described below with reference to Figs. 1A and 1B. Fig. 1A is a side view of a vehicle 100, and Fig. 1B is a top view of the vehicle 100.

As shown in Figs. 1A and 1B, a seat and multiple in-vehicle environment parameter acquisition devices may be installed in the vehicle 100. Specifically, the seat may comprise front seats (including a driver's seat 112 and a front passenger's seat 114) and rear seats (including a seat 122 and a seat 124). The multiple in-vehicle environment parameter acquisition devices may comprise at least one of an environment parameter acquisition device 132 in front of the driver, and an environment parameter acquisition device 134 in front of the front passenger. The environment parameter acquisition device 132 may be configured to acquire at least one of in-vehicle temperature, illumination intensity, airflow speed (e.g. in-vehicle air conditioning airflow speed and/or airflow speed of airflow exiting from outside the vehicle) and airflow control mode (e.g. in-vehicle air conditioning control mode) at the position of the environment parameter acquisition device 132. The environment parameter acquisition device 134 may be configured to acquire at least one of in-vehicle temperature, illumination intensity, airflow speed and airflow control mode at the position of the environment parameter acquisition device 134.

Optionally, the multiple in-vehicle environment parameter acquisition devices may further comprise: at least one of an environment parameter acquisition device 102 located in a front part of the vehicle 100 and an environment parameter acquisition device 104 located in a middle part of the vehicle 100, and at least one of an environment parameter acquisition device 106 located in a rear part of the vehicle 100. The environment parameter acquisition device 102 located in the front part of the vehicle 100 is configured to acquire at least one of in-vehicle temperature, illumination intensity, airflow speed and airflow control mode in the front part of the vehicle 100; the environment parameter acquisition device 104 located in the middle part of the vehicle 100 is configured to acquire at least one of in-vehicle temperature, illumination intensity, airflow speed and airflow control mode in the middle part of the vehicle 100; and the environment parameter acquisition device 106 located in the rear part of the vehicle 100 is configured to acquire at least one of in-vehicle temperature, illumination intensity, airflow speed and airflow control mode in the rear part of the vehicle 100.

Optionally, the multiple in-vehicle environment parameter acquisition devices may further comprise: at least one of an environment parameter acquisition device 142 located at a window close to the seat 112, an environment parameter acquisition device 144 located at a window close to the seat 114, an environment parameter acquisition device 146 located at a window close to the seat 122, and an environment parameter acquisition device 148 located at a window close to the seat 124. The environment parameter acquisition device 142 located at the window close to the seat 112 is configured to acquire at least one of in-vehicle temperature, illumination intensity, airflow speed and airflow control mode at the window close to the seat 112; the environment parameter acquisition device 144 located at the window close to the seat 114 is configured to acquire at least one of in-vehicle temperature, illumination intensity, airflow speed and airflow control mode at the window close to the seat 114; the environment parameter acquisition device 146 located at the window close to the seat 122 is configured to acquire at least one of in-vehicle temperature, illumination intensity, airflow speed and airflow control mode at the window close to the seat 122; and the environment parameter acquisition device 148 located at the window close to the seat 124 is configured to acquire at least one of in-vehicle temperature, illumination intensity, airflow speed and airflow control mode at the window close to the seat 124.

One or more outside-vehicle environment parameter acquisition device may further be installed outside the vehicle 100. For example, the outside-vehicle environment parameter acquisition device may comprise: at least one of an outside-vehicle environment parameter acquisition device 152 located on a front part of the vehicle 100, and an outside-vehicle environment parameter acquisition device 154 located on a rear part of the vehicle 100. The outside-vehicle environment parameter acquisition device 152 located on the front part of the vehicle 100 is configured to acquire at least one of outside-vehicle temperature, illumination intensity and airflow speed (e.g. airflow speed of natural wind outside the vehicle and/or airflow speed of air conditioning outside the vehicle) at the front part of the vehicle 100; the outside-vehicle environment parameter acquisition device 154 located on the rear part of the vehicle 100 is configured to acquire at least one of outside-vehicle temperature, illumination intensity and airflow speed at the rear part of the vehicle 100.

For the vehicle 100, the method of the present disclosure can be used to acquire parameters of the in-vehicle environment parameter acquisition devices (e.g. at least one of the environment parameter acquisition device 132, the environment parameter acquisition device 134, the environment parameter acquisition device 102, the environment parameter acquisition device 104, the environment parameter acquisition device 106, the environment parameter acquisition device 142, the environment parameter acquisition device 144, the environment parameter acquisition device 146 and the environment parameter acquisition device 148) and parameters of the outside-vehicle environment parameter acquisition devices (e.g. at least one of the environment parameter acquisition device 152 and the environment parameter acquisition device 154); and based on the in-vehicle environment parameters acquired by the in-vehicle environment parameter acquisition devices and the outside-vehicle environment parameters acquired by the outside-vehicle environment parameter acquisition devices, a neural network model can be used to predict at least one representative temperature in the vehicle 100 (e.g. temperature of a centre point in the vehicle, temperature around the driver's head, etc.); and based on the at least one representative temperature in the vehicle 100, an operating mode of an environment parameter control device (e.g. air conditioning) in the vehicle 100 can be adjusted, so that the in-vehicle environment remains in a comfortable state.

For the vehicle 100, a method for controlling temperature in a specific space may be realized using a vehicle controller (for example, the vehicle controller directly acquires parameters acquired by the environment parameter acquisition devices, predicts at least one representative temperature in the vehicle 100, and on this basis controls temperature in the specific space) or a network server (for example, the vehicle sends the parameters acquired by the environment parameter acquisition devices to the network server, and the network server predicts at least one representative temperature in the vehicle 100, and on this basis controls temperature in the specific space).

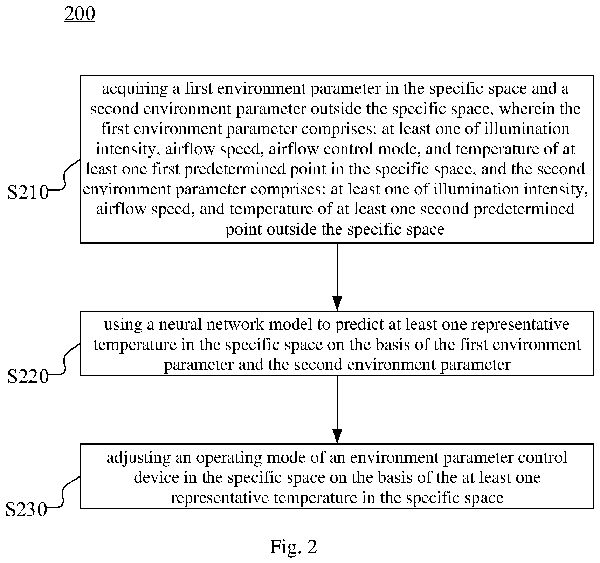

Fig. 2 is a schematic flow chart of a method 200 for controlling temperature in a specific space according to embodiments of the present disclosure.

The method 200 comprises step S210, step S220 and step S230, wherein step S210 and step S220 are used to acquire a temperature in the specific space, and step S230 is used to control temperature in the specific space on the basis of the temperature in the specific space acquired in step S210 and step S220.

In step S210, a first environment parameter in the specific space and a second environment parameter outside the specific space can be acquired, wherein the first environment parameter comprises: at least one of illumination intensity, airflow speed, airflow control mode, and temperature of at least one first predetermined point in the specific space, and the second environment parameter comprises: at least one of illumination intensity, airflow speed, and temperature of at least one second predetermined point outside the specific space.

According to embodiments of the present disclosure, the first environment parameter may be multiple first environment parameters; for example, the first environment parameter may comprise multiple environment parameters at different positions, and/or the first environment parameter may comprise multiple environment parameters acquired by different sensors at the same position. As an example, the first environment parameter may comprise temperature at a first position, temperature and airflow speed at a second position, illumination intensity at a third position, etc. Similarly, the second environment parameter may be multiple second environment parameters; for example, the second environment parameter may comprise multiple environment parameters at different positions, and/or the second environment parameter may comprise multiple environment parameters acquired by different sensors at the same position. As an example, the second environment parameter may comprise temperature at a fourth position, temperature and airflow speed at a fifth position, illumination intensity at a sixth position, etc.

According to embodiments of the present disclosure, the specific space may be any one of a vehicle, a train carriage, an aeroplane, a laboratory cabin module and a room, and the specific space may be an airtight space or a non-airtight space.

For example, in the case where the specific space is a vehicle, the first environment parameter may be obtained by means of the in-vehicle environment parameter acquisition device described above with respect to Figs. 1A and 1B, and the second environment parameter may be obtained by means of the outside-vehicle environment parameter acquisition device described above with respect to Figs. 1A and 1B.

In step S220, a neural network model can be used to predict at least one representative temperature in the specific space on the basis of the first environment parameter and the second environment parameter.

According to embodiments of the present disclosure, the at least one representative temperature in the specific space comprises a temperature of at least one key position in the specific space, wherein the at least one key position in the specific space comprises at least one of a position of a user in the specific space and a position of a key device in the specific space.

For example, in a vehicle application scenario, the key position may be a position of a driver and/or a passenger. In the case of a laboratory cabin module, the key position may be a position of an experimental apparatus and/or an experimental sample.

According to embodiments of the present disclosure, the at least one key position in the specific space may be a position where installation of a temperature sensor is inconvenient or inappropriate. For example, in the case where the specific space is a vehicle, the representative temperature in the vehicle may be temperature at a centre point in the vehicle, temperature at a position of a driver or passenger in the vehicle (e.g. a temperature around the driver's head). It will be understood that the temperature at the centre point or around the driver's head in the vehicle is highly significant with regard to adjustment of whole-vehicle comfort, but the installation of temperature sensors at these positions is often inconvenient or inappropriate (due to vehicle aesthetics, or to avoid hindering the use of other vehicle functions by the user, or for other reasons). The method of the present disclosure can obtain representative temperatures at these positions accurately by prediction without installing sensors at these positions, so as to further control the representative temperatures at these positions in step S230.

In step S230, an operating mode of an environment parameter control device in the specific space can be adjusted on the basis of the at least one representative temperature in the specific space.

According to embodiments of the present disclosure, the environment parameter control device may comprise at least one heating device (e.g. a heater, heating air conditioning, etc.) and/or at least one cooling device (e.g. a fan, cooling air conditioning, etc.). Adjustment of the operating mode of the environment parameter control device in the specific space may comprise switching the environment parameter control device on or off, or adjusting a cooling or heating power of the environment parameter control device, etc.

According to embodiments of the present disclosure, the environment parameter control device may comprise multiple control sub-devices (for example, the environment parameter control device in a laboratory cabin module may comprise an electric heater, air conditioning, a fresh air device, etc.). Each of the key positions may be associated with at least one said control sub-device.

As an example, each of the key positions may be associated with one or more specific control sub-device, rather than with all of the control sub-devices. If adjustment of temperature at a key position is required, one or more control sub-device associated therewith may be selected, and an operating mode of the selected control sub-device is adjusted. In this way it is possible to avoid problems such as high energy consumption and complex control strategy caused by all of the control sub-devices operating when adjustment of temperature at a key position is required; a temperature control strategy can be effectively optimized, reducing the energy consumption of the control sub-devices.

The method 200 of the present disclosure for controlling temperature in a specific space can simultaneously take into account the influence of the first environment parameters in the specific space (e.g. at least one of illumination intensity, airflow speed, airflow control mode, and temperature of at least one first predetermined point in the specific space) and the second environment parameters outside the specific space (e.g. at least one of illumination intensity, airflow speed, and temperature of at least one second predetermined point outside the specific space) on temperature in the specific space, to measure at least one representative temperature in the specific space with greater sensitivity and accuracy at a lower cost, and control temperature in the specific space more accurately and effectively on this basis. Further, since the efficacy of control of temperature in the specific space is increased, the energy consumption of the environment parameter control device that controls temperature in the specific space is also reduced.

In application scenarios in which the specific space is a vehicle, train carriage, aeroplane or room, etc., the method 200 of the present disclosure for controlling temperature in a specific space is able to quickly and accurately control temperature within a range of human comfort, so as to make a person in the specific space more comfortable.

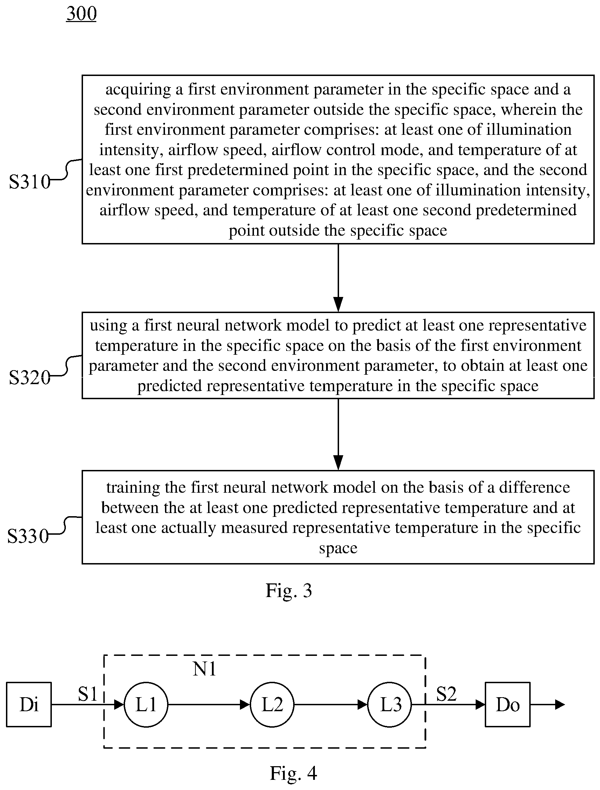

Fig. 3 is a schematic flow chart of a method 300 for training a neural network model according to embodiments of the present disclosure.

In step S310, a first environment parameter in the specific space and a second environment parameter outside the specific space can be acquired, wherein the first environment parameter comprises: at least one of illumination intensity, airflow speed, airflow control mode, and temperature of at least one first predetermined point in the specific space, and the second environment parameter comprises: at least one of illumination intensity, airflow speed, and temperature of at least one second predetermined point outside the specific space.

In step S320, a first neural network model can be used to predict at least one representative temperature in the specific space on the basis of the first environment parameter and the second environment parameter, to obtain at least one predicted representative temperature in the specific space.

It will be understood that step S310 may be realized in a similar way to step S210, and step S320 may be realized in a similar way to step S220. Step S310 and step S320 are used for a neural network training process; step S210 and step S220 are used for a neural network use (i.e. inference) process.

In step S330, the first neural network model can be trained on the basis of a difference between the at least one predicted representative temperature and at least one actually measured representative temperature in the specific space.

According to embodiments of the present disclosure, the first neural network model may be a back propagation (BP) neural network, but is not limited to this.

As an example, the first neural network model may process data by a process as shown in Fig. 4. As shown in Fig. 4, the first neural network model N1 may have an input layer L1, a hidden layer L2 and an output layer L3. Input data Di can be inputted into the first neural network model N1 after undergoing normalization S1, and undergoes processing by the first neural network model N1 (i.e. sequentially undergoes processing in the input layer L1, hidden layer L2 and output layer L3), then further undergoes denormalization S2 to obtain output data Do. As an example, an activation function of the hidden layer L2 may be determined on the basis of a logic function (i.e. the Sigmoid function), but is not limited to this.

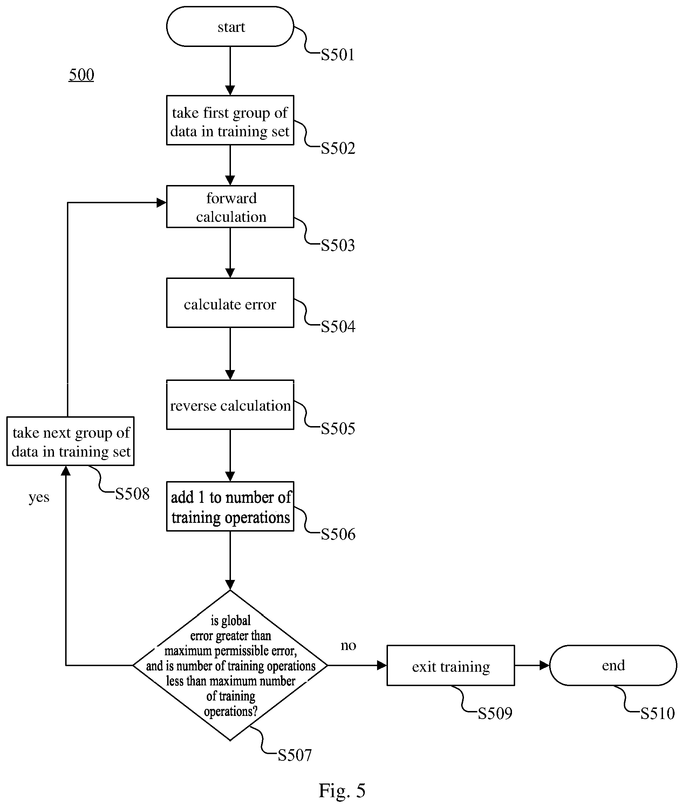

According to embodiments of the present disclosure, the first neural network model can be trained by a process 500 shown in Fig. 5.

In step S501, training of the first neural network model begins. Firstly, a first group of data in a training set can be taken in step S502, wherein each group of data in the set may comprise a first environment parameter and/or a second environment parameter, and a corresponding actually measured representative temperature. Next, in step S503, forward calculation of a first neural network can be performed by a process similar to that shown in Fig. 4, i.e. input data is processed sequentially via an input layer, a hidden layer and an output layer of the first neural network, to obtain at least one predicted representative temperature. Next, a difference between the at least one predicted representative temperature and a corresponding actually measured representative temperature can be obtained by comparison (for example, in step S504, a value of an error function is calculated on the basis of the at least one predicted representative temperature and the corresponding actually measured representative temperature). Further, reverse calculation can be performed in step S505 to adjust parameters of the output layer, hidden layer and input layer, and 1 can be added to the number of training operations in step S506. In step S507, a judgement can be made as to whether the following condition is met: is the error greater than a maximum permissible error, and is the number of training operations less than a maximum number of training operations? If this condition is met, the method proceeds to step S508, taking the next group of data in the training set, and the method continues, returning to step S503 to perform training. If the condition is not met, the method proceeds to step S509, exiting training, and ending the training process, to obtain a trained first neural network model. The trained first neural network model can predict at least one representative temperature in the specific space on the basis of the first environment parameter and the second environment parameter.

Returning to Fig. 3, according to embodiments of the present disclosure, after obtaining at least one predicted representative temperature on the basis of step S320, a second neural network model can also be further used to predict an operating mode of an environment parameter control device in the specific space on the basis of the at least one predicted representative temperature, to obtain a predicted operating mode; and the second neural network model is trained on the basis of a difference between the predicted operating mode and an empirical operating mode corresponding to the at least one predicted representative temperature.

As a result of training the second neural network model in a similar way to that in which the first neural network model is trained, the trained second neural network model can design a suitable operating mode (e.g. controlling the switching of air conditioning on or off, adjusting air conditioning airflow speed, adjusting air conditioning airflow direction, etc.) for an environment parameter control device to correspond to the predicted representative temperature in the specific space, so as to control the representative temperature in the specific space to remain within a required range (e.g. a range that makes a person comfortable).

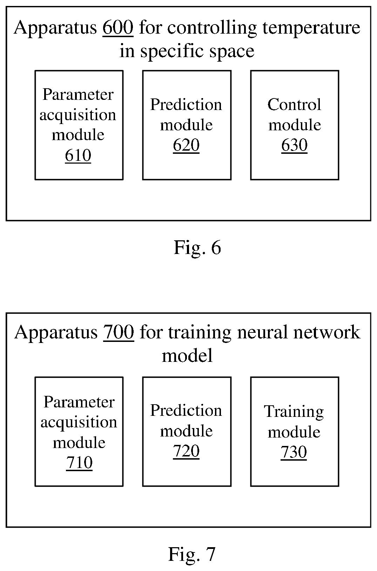

Fig. 6 is a schematic drawing of the composition of an apparatus 600 for controlling temperature in a specific space according to embodiments of the present disclosure.

According to embodiments of the present disclosure, the apparatus 600 for controlling temperature in a specific space comprises a parameter acquisition module 610, a prediction module 620 and a control module 630.

The parameter acquisition module 610 may be configured to: acquire a first environment parameter in the specific space and a second environment parameter outside the specific space, wherein the first environment parameter comprises: at least one of illumination intensity, airflow speed, airflow control mode, and temperature of at least one first predetermined point in the specific space, and the second environment parameter comprises: at least one of illumination intensity, airflow speed, and temperature of at least one second predetermined point outside the specific space.

The prediction module 620 may be configured to: use a neural network model to predict at least one representative temperature in the specific space on the basis of the first environment parameter and the second environment parameter.

The control module 630 may be configured to: adjust an operating mode of an environment parameter control device in the specific space on the basis of the at least one representative temperature in the specific space.

According to embodiments of the present disclosure, the parameter acquisition module 610 and the prediction module 620 may be used alone to acquire a temperature in the specific space, without using the control module 630.

It should be understood that the apparatus 600 for controlling temperature in a specific space in Fig. 6 can realize the method 200 for controlling temperature in a specific space described with respect to Fig. 2, which is not described again here. In the case where the specific space is a vehicle, the apparatus 600 for controlling temperature in a specific space may be located in a vehicle controller or a network server.

Fig. 7 is a schematic drawing of the composition of an apparatus 700 for training a neural network model according to embodiments of the present disclosure.

According to embodiments of the present disclosure, the apparatus 700 for training a neural network model comprises a parameter acquisition module 710, a prediction module 720 and a training module 730.

The parameter acquisition module 710 may be configured to: acquire a first environment parameter in the specific space and a second environment parameter outside the specific space, wherein the first environment parameter comprises: at least one of illumination intensity, airflow speed, airflow control mode, and temperature of at least one first predetermined point in the specific space, and the second environment parameter comprises: at least one of illumination intensity, airflow speed, and temperature of at least one second predetermined point outside the specific space.

The prediction module 720 may be configured to: use a first neural network model to predict at least one representative temperature in the specific space on the basis of the first environment parameter and the second environment parameter, to obtain at least one predicted representative temperature in the specific space.

The training module 730 may be configured to: train the first neural network model on the basis of a difference between the at least one predicted representative temperature and at least one actually measured representative temperature in the specific space.

The trained first neural network model can predict at least one representative temperature in the specific space on the basis of the first environment parameter and the second environment parameter.

According to embodiments of the present disclosure, the prediction module 720 may be further configured to: use a second neural network model to predict an operating mode of an environment parameter control device in the specific space on the basis of the at least one predicted representative temperature, to obtain a predicted operating mode. The training module 730 may be further configured to: train the second neural network model on the basis of a difference between the predicted operating mode and an empirical operating mode corresponding to the at least one predicted representative temperature. The trained second neural network model can design a suitable operating mode for an environment parameter control device to correspond to the predicted representative temperature in the specific space.

It will be understood that the apparatus 700 for training a neural network model in Fig. 7 can realize the method 300 for training a neural network model described with respect to Fig. 3, which is not described again here. According to embodiments of the present disclosure, the parameter acquisition module 710 and the prediction module 720 may have structures and functions similar to those of the parameter acquisition module 610 and the prediction module 620 in Fig. 6.

In general, various exemplary embodiments of the present disclosure may be implemented in hardware or dedicated circuitry, software, firmware, logic, or any combination thereof. Certain aspects may be implemented in hardware, while other aspects may be implemented in firmware or software that may be executed by a controller, microprocessor, or other computing device. When aspects of embodiments of the present disclosure are illustrated or described as block diagrams or flow charts, or represented using other graphics, it will be understood that the blocks, apparatuses, systems, techniques or methods described here may be implemented as non-limiting examples in hardware, software, firmware, dedicated circuitry or logic, general-purpose hardware or controllers or other computing devices, or combinations thereof.

Embodiments of the present disclosure further provide a temperature control device, comprising: a memory and a processor, wherein the memory stores an instruction executable by the processor, and the instruction, when executed by the processor, causes the processor to perform the method for controlling temperature in a specific space according to embodiments of the present disclosure.

Embodiments of the present disclosure further provide a vehicle controller, comprising: a memory and a processor, the processor being coupled to the memory and configured to perform the method for controlling temperature in a specific space or the method for acquiring temperature in a specific space according to embodiments of the present disclosure.

Embodiments of the present disclosure further provide a vehicle, comprising the vehicle controller described above to measure or control temperature in the vehicle.

According to another aspect of the present disclosure, a computer-readable storage medium is further provided. A computer-readable instruction is stored on the computer storage medium. When the computer-readable instruction is run by a processor, the method according to embodiments of the present disclosure that is described with reference to the drawings above can be performed. The computer-readable storage medium in embodiments of the present disclosure may be a volatile memory or non-volatile memory, or may comprise both volatile and non-volatile memories. The non-volatile memory may be read-only memory (ROM), programmable read-only memory (PROM), erasable programmable read-only memory (EPROM), electrically erasable programmable read-only memory (EEPROM) or flash memory). The volatile memory may be random access memory (RAM), used as an external high-speed cache. By way of exemplary but non-limiting illustration, many forms of RAM may be used, e.g. static random access memory (SRAM), dynamic random access memory (DRAM), synchronous dynamic random access memory (SDRAM), double data rate synchronous dynamic random access memory (DDRSDRAM), enhanced synchronous dynamic random access memory (ESDRAM), synchronous link dynamic random access memory (SLDRAM) and direct rambus random access memory (DR RAM). It should be noted that the memory of the method described herein is intended to include, but not be limited to, these and any other suitable types of memory. It should be noted that the memory of the method described herein is intended to include, but not be limited to, these and any other suitable types of memory.

Embodiments of the present disclosure further provide a computer program product, comprising computer software code which, when executed by a processor, is used to implement the method of embodiments of the present disclosure.

In summary, the present disclosure provides a method for controlling temperature in a specific space, a method for acquiring temperature in a specific space, a method for training a neural network model, an apparatus for controlling temperature in a specific space, an apparatus for training a neural network model, a temperature control device, a vehicle controller, a vehicle, a computer program product, and a computer-readable storage medium. The method for controlling temperature in a specific space comprises: acquiring a first environment parameter in the specific space and a second environment parameter outside the specific space, wherein the first environment parameter comprises: at least one of illumination intensity, airflow speed, airflow control mode, and temperature of at least one first predetermined point in the specific space, and the second environment parameter comprises: at least one of illumination intensity, airflow speed, and temperature of at least one second predetermined point outside the specific space; using a neural network model to predict at least one representative temperature in the specific space on the basis of the first environment parameter and the second environment parameter; and adjusting an operating mode of an environment parameter control device in the specific space on the basis of the at least one representative temperature in the specific space.

The method of the present disclosure for controlling temperature in a specific space can simultaneously take into account the influence of the first environment parameters in the specific space (e.g. at least one of illumination intensity, airflow speed, airflow control mode, and temperature of at least one first predetermined point in the specific space) and the second environment parameters outside the specific space (e.g. at least one of illumination intensity, airflow speed, and temperature of at least one second predetermined point outside the specific space) on temperature in the specific space, to measure at least one representative temperature in the specific space with greater sensitivity and accuracy at a lower cost, and control temperature in the specific space more accurately and effectively on this basis. Further, since the efficacy of control of temperature in the specific space is increased, the energy consumption of the environment parameter control device that controls temperature in the specific space is also reduced. In application scenarios in which the specific space is a vehicle, train carriage, aeroplane or room, etc., the method of the present disclosure for controlling temperature in a specific space is able to quickly and accurately control temperature within a range of human comfort, so as to make a person in the specific space more comfortable.

It must be explained that the flow charts and block diagrams in the drawings illustrate possible system architectures, functions and operations of the system, method and computer program product according to various embodiments of the present disclosure. On this point, each box in the flow charts or block diagrams may represent a module, a program segment or part of code, and the module, program segment or part of code includes at least one executable instruction for implementing a specified logic function. It should also be noted that, in some alternative implementations, the functions marked in the boxes may also occur in a different order to that marked in the figures. For example, two boxes shown in succession may actually be executed substantially in parallel, and sometimes may also be executed in reverse order, depending on the functions involved. It should also be noted that each box in the block diagrams and/or flow charts, and combinations of boxes in the block diagrams and/or flow charts, may be implemented using a dedicated hardware-based system which executes specified functions or operations, or may be implemented using a combination of dedicated hardware and computer instructions.

The present disclosure uses specific words to describe embodiments of the present disclosure. For example, "first/second embodiment", "an embodiment" and/or "some embodiments" mean a certain feature, structure or characteristic related to at least one embodiment of the present disclosure. Therefore, it should be stressed and noted that "an embodiment", "one embodiment" or "an alternative embodiment" mentioned two or more times in different places herein does not necessarily refer to the same embodiment. In addition, certain features, structures or characteristics in one or more embodiments of the present disclosure may be combined appropriately.

In embodiments of the present disclosure, the term "module" or "unit" means a computer program or part of a computer program with a predetermined function, and works with other associated parts to achieve a predetermined objective, and may be fully or partially implemented by using software, hardware (such as a processing circuit or memory) or a combination thereof. Similarly, one processor (or multiple processors or memories) may be used to realize one or more module or unit. In addition, each module or unit may be part of an overall module or unit that contains a function of the module or unit.

It should be explained that, in the present disclosure, the terms "comprise", "include" or any other variants thereof are intended to cover non-exclusive inclusion, so that a process, method, item or device comprising a series of key elements does not only comprise these key elements, but also comprises other key elements that are not explicitly listed, or also comprises key elements intrinsic to such a process, method, item or device. Without further restriction, a key element defined by the phrase "comprising one..." does not rule out the presence of another identical key element in a process, method, item or device comprising the key element.

In addition, a series of processing operations described above does not only comprise processing operations executed chronologically in the order described herein, but also comprises processing operations executed in parallel or separately rather than chronologically.

Unless otherwise defined, all of the terms (including technical and scientific terms) used herein have the same meanings as those commonly understood by those skilled in the art. It should also be understood that terms such as those defined in a common dictionary should be interpreted as having the same meanings as they have in the context of the related art, rather than being interpreted in an idealized or extremely formalized sense, unless expressly so defined herein.

The above is a description of the present disclosure, and should not be regarded as a limitation thereof. Although several exemplary embodiments of the present disclosure have been described, a person skilled in the art will readily understand that many modifications can be made to the exemplary embodiments without departing from the novel teaching and advantages of the present disclosure. Therefore, all such modifications are intended to be included within the scope of the present disclosure as defined by the claims. It should be understood that the above is a description of the present disclosure, and should not be deemed to be limited to the specific embodiments disclosed; in addition, modifications made to the disclosed embodiments and other embodiments are intended to be included within the scope of the attached claims. The present disclosure is defined by the claims and their equivalents.

## Claims

1. Method for controlling temperature in a specific space, comprising:
acquiring a first environment parameter in the specific space and a second environment parameter outside the specific space, wherein the first environment parameter comprises: at least one of illumination intensity, airflow speed, airflow control mode, and temperature of at least one first predetermined point in the specific space, and the second environment parameter comprises: at least one of illumination intensity, airflow speed, and temperature of at least one second predetermined point outside the specific space;
using a neural network model to predict at least one representative temperature in the specific space on the basis of the first environment parameter and the second environment parameter; and
adjusting an operating mode of an environment parameter control device in the specific space on the basis of the at least one representative temperature in the specific space.

2. Method according to Claim 1, wherein the at least one representative temperature in the specific space comprises a temperature of at least one key position in the specific space, wherein the at least one key position in the specific space comprises at least one of a position of a user in the specific space and a position of a key device in the specific space.

3. Method according to Claim 2, wherein
the environment parameter control device comprises multiple control sub-devices, wherein each said key position is associated with at least one said control sub-device.

4. Method according to any one of Claims 1 - 3, wherein
the specific space is any one of a vehicle, a train carriage, an aeroplane, a laboratory cabin module and a room, and the environment parameter control device comprises at least one heating device and/or at least one cooling device.

5. Method for acquiring temperature in a specific space, comprising:
acquiring a first environment parameter in the specific space and a second environment parameter outside the specific space, wherein the first environment parameter comprises: at least one of illumination intensity, airflow speed, airflow control mode, and temperature of at least one first predetermined point in the specific space, and the second environment parameter comprises: at least one of illumination intensity, airflow speed, and temperature of at least one second predetermined point outside the specific space; and
using a neural network model to predict at least one representative temperature in the specific space on the basis of the first environment parameter and the second environment parameter.

6. Method for training a neural network model, comprising:
acquiring a first environment parameter in the specific space and a second environment parameter outside the specific space, wherein the first environment parameter comprises: at least one of illumination intensity, airflow speed, airflow control mode, and temperature of at least one first predetermined point in the specific space, and the second environment parameter comprises: at least one of illumination intensity, airflow speed, and temperature of at least one second predetermined point outside the specific space;
using a first neural network model to predict at least one representative temperature in the specific space on the basis of the first environment parameter and the second environment parameter, to obtain at least one predicted representative temperature in the specific space; and
training the first neural network model on the basis of a difference between the at least one predicted representative temperature and at least one actually measured representative temperature in the specific space.

7. Method according to Claim 6, wherein the first neural network model comprises an input layer, a hidden layer and an output layer, wherein
the first environment parameter and the second environment parameter are processed sequentially via the input layer, the hidden layer and the output layer to obtain the at least one predicted representative temperature in the specific space;
wherein an activation function of the hidden layer is determined on the basis of a logic function.

8. Method according to Claim 6, further comprising:
using a second neural network model to predict an operating mode of an environment parameter control device in the specific space on the basis of the at least one predicted representative temperature, to obtain a predicted operating mode; and
training the second neural network model on the basis of a difference between the predicted operating mode and an empirical operating mode corresponding to the at least one predicted representative temperature.

9. Temperature control device, comprising:
a memory; and
a processor;
wherein the memory stores an instruction executable by the processor, and the instruction, when executed by the processor, causes the processor to perform the method according to any one of Claims 1 - 4.

10. Computer program product, comprising computer software code which, when executed by a processor, is used to implement the method according to any one of Claims 1 - 8.

11. Computer-readable storage medium, having stored thereon a computer-executable instruction which, when executed by a processor, is used to implement the method according to any one of Claims 1 - 8.
